# EUROPEAN PATENT APPLICATION

(11) **EP 4 071 631 A1**
(43) Date of publication of application: **12.10.2022**
(21) Application number: 21305436.4
(22) Date of filing: 06.04.2021
(51) Int. Cl.: G06F 16/25, G06F 16/27, G06Q 10/02

(54) **A SYSTEM AND METHOD FOR EXCHANGING AND MANAGING DATA STORED IN HETEROGENEOUS DATA SOURCES**

(71) Applicant: Amadeus S.A.S., 06410 Biot (FR)
(72) Inventor: CASTAING, Thibaud Nicolas, 06250 Mougins (FR); CHANOIR, Beranger, 06530 PEYMEINADE (FR); JOUSSE, Alexandre, DUBLIN, D02 PX51 (US)
(74) Representative: Samson & Partner Patentanwälte mbB

(57) **Abstract**

The present invention is configured for facilitating communication between heterogeneous system using a communication module. The communication module is configured, before the communication of the data to be exchanged, to convert the data format of the data to the corresponding first or second data format depending on the destination data management system to facilitate the communication and processing of data between the central and local data management systems.

## Description

### Field

The present invention relates to a method and a system for managing data stored in data management systems of heterogeneous architectures.

### Background

Currently, systems exist for managing and processing data for the execution of a predetermined service. Depending on the application, the different systems may store different portions of the data required for performing the required service. For example, a portion of the required data may be stored in a central data management system, while another portion of the required data may be stored in a local data management system connected to a software application configured to perform the required service. In some cases, the central and local data management systems are deployed in servers with heterogenous database architectures that are incompatible with one another. As such, direct data exchange between central and local data management systems cannot be performed. Instead, the user and/or application needs to independently access each data management system to retrieve the required data and perform the required operations. Current solutions merely rely on replicating and synchronising data between data management systems, e.g. using application programming interfaces (APIs). However, in systems with heterogeneous database architecture, direct synchronisation is impossible due to technology incompatibilities. Furthermore, depending on the security constraints of the central and/or local data management systems, communication of data via APIs may be blocked to avoid security breaches.

Therefore, there is a need to provide a system and a method for exchanging data systems configured for storing data in heterogeneous database technologies.

### Summary of the invention

An aim of the present invention is to provide a system and method that overcome the limitations of the prior art solutions.

Another aim of the present invention is to facilitate data exchange between a central reservation system (CRS) and a property management system (PMS).

According to a first aspect of the present invention, a computer system is provided for managing data stored in heterogeneous technology data sources. The computer system comprising:
a central data management system comprising a database configured to store, in a first data format, central data records comprising primary data associated with one or more application services;
a local data management system comprising a database configured to store, in a local data format, local data records comprising data associated with data of a corresponding central data record;
wherein the local data records and the primary central data records are accessible by one or more service applications connected to the central and local data management system for the execution of a predetermined service; and
a communication module communicatively coupled to the central and local data management system and configured to facilitate, in response to message requests received from the one or more service applications, the exchange of data between the central data management system and the local management system for the execution of the predetermined service by the one or more service applications;
wherein the communication module is configured, before the communication of the data to be exchanged, to convert the data format of the exchanged data to the first or second data format depending on the destination data management system, to facilitate the communication and processing of data between the central and local data management systems.

The central and local data management systems are configured to store data associated with a predetermined service, e.g. hotel reservation booking. The data is stored in corresponding data records using different data format. The present invention provides a communication module configured for converting the data format of the data exchanged between the two data management systems, thereby allowing for data stored in one data management system to be used and processed by the other data management system. In this way, a user and/or application can access the required data from a single access point, e.g. via a portal, thus enabling the faster execution of the application service. The present invention facilitates the communication of data between heterogeneous systems by converting and/or translating the data format of the exchanged data to a compatible data format that can be directly consumed by the central and/or local data management systems to execute the requested service. In particular, the present invention enables the integration of data stored in heterogeneous database technologies, thereby dispensing with the need for replicating data records in both systems and allowing each system to store and process specific portions of the data associated with the predetermined service. For example, in the case of a travel booking, the central data management system may be configured to store reservation data associated with the travel booking, and the local data management system may be configured to store data associated with a specific service in the travel booking, e.g. hotel data.

According to embodiments of the present invention, the communication module comprises a message adaption module configured for selecting, based on the technology of the data management system configured for receiving the exchanged data, a data adaptation protocol for converting the data format of the data exchanged between the central and local data management systems.

The communication module of the present invention is provided with a message adaptation module, which is configured to select a suitable data adaptation protocol for converting and/or translating the exchanged data. The adaption protocol is selected based on the data protocol and/or format of the destination data management system. In this way, the communication module facilitates data exchange with different systems in an agnostic manner.

According to embodiments of the present invention, the communication module comprises a data management module configured, in response to receiving a message request from the central data management system associated with a change of primary data of a central data record, to assess, based on information contained in the message, whether the update necessitates certain actions to be performed to the one or more corresponding local data records. If actions are to be performed, the data management module is configured to:
identify the local data records affected by the update in the central data record;
perform the necessary actions in the identified one or more local data records; and
issue a notification to a user and/or application connected to the local data management system informing of the actions taken to one or more local data records.

According to embodiments of the present invention, the actions to be performed are determined based on a set of criteria.

According to embodiments of the present invention, the actions to be performed comprise at least one of updating, deleting, or modifying the local data records.

The communication module of the present invention is further configured to process the messages communicated and accordingly determine whether certain actions need to be performed to stored data records. For example, in the case of a change is made to a central data record, the data management module is configured of assessing the criticality of the change made to the central data record and accordingly determine whether actions need to performed to corresponding local data records. The criticality of a data record change may be assessed based on a set of criteria and define the follow-up actions to be performed. For example, the criteria may define the type of changes in a data record that necessitate an action to be performed in a corresponding data record and define the appropriate action to be taken, e.g. delete, modify, update. The data management module is configured once an action is triggered to identify the data records to be modified and perform the identified actions. Once the actions are performed, e.g. deletion or modification of data, a notification is issued to a user and/or an application with information on the actions taken. For example, a software application may be configured to receive the notifications issued in response to an action taken in the data records. The software application is configured to provide a set of follow-up actions to the user. For example, in the case of a hotel reservation change, the data management module may change the type of room assigned to a hotel reservation and inform the front-desk application informing the user of the change and follow-up actions.

According to embodiments of the present invention, the communication module comprises an authentication module configured for authenticating, based on a set of authentication criteria, the credential of the service application issuing the message request before the message request is formatted and communicated to the desired destination data management system.

According to embodiments of the present invention, the authentication module is configured to authenticate the credentials of a service application request based on stored authentication data.

To ensure that the security constraints of each data management system are not compromised, the communication module is configured for performing an authentication of the system and/or application issuing the request for accessing data from a desired data management system. For example, the authentication credential used for authenticating the system and/or application issuing the request may be stored in an authentication database, which is communicatively coupled to the communication module and/or is part of the communication module. For example, the communication module may reside in the interface layer of one of the database management system, e.g. central or local data management systems. The authentication credentials may be updated regularly.

According to embodiments of the present invention, the central data management system is communicatively coupled to a booking application, which is configured for generating, in response to receiving a reservation request from a reservation service application connected to the local data management system, one or more central data records associated with the reservation request.

According to embodiments of the present invention, the central data management system is configured upon creating one or more central data records for issuing a notification, via the communication module, to the local data management system.

According to embodiments of the present invention, the local data management system is configured upon receiving the notification of generating and/or updating corresponding local data records.

According to embodiments of the present invention, the local data management system is configured upon receiving from a service application a request for modifying a central data record for issuing via the communication module a message request to the central data management system.

According to embodiments of the present invention, wherein, upon receiving an acknowledgement from the central data management system confirming the central data record modification, the local data management system is configured for updating the corresponding local data records and issuing a notification to the application initiated the modification request.

The present invention may be used in a range of application. For example, the present invention may be used in the travel sector to interface between heterogeneous system handing travel bookings. In this context, the communication module ensures that in response to an application request, a booking record is created at the central data management system, and accordingly, corresponding secondary data records are created in the local data management system. As such, the user and/or application is able to generate and manage booking data records via an application connected to the local data management system. In this way, the central data management system database is updated in real-time or near real-time, thereby ensuring that the availability of products, e.g. hotel rooms, is maintained up to date.

According to embodiments of the present invention, the central data management system is a central reservation system configured for generating booking data records stored as central data records, and the local data management system is a property management system configured for associating property management records to each booking data record.

According to embodiments of the present invention, the local data records are stored in a SQL database, and the central data records are stored in different database architecture e.g. a no SQL database.

According to embodiments of the present invention, the central and local data management systems are hosted on respective heterogeneous architecture data servers.

According to embodiments of the present invention, the central data management system and the local data management system are accessible via a common user interface. For example, via the common interface, user and/or application requests may be received at the communication module, which would accordingly retrieve the required data and perform the required actions at the central and/or local data management systems to execute the requested service.

According to embodiments of the present invention, the system of any one of the preceding claims, wherein the communication module is a web application server accessible via the internet.

According to a second aspect of the present invention, a method for exchanging data stored in heterogeneous technology data sources, the method performed in a computer system according to embodiments of the first aspect, the method comprising the steps of:
receiving at a local data management system a message request from a service application for performing certain actions to primary data of a central data record stored in a database of a central data management system;
transmitting the message request to the central data management system via a communication module;
receiving the message request at the central data management system;
performing at the central data management system the actions indicated in the message request; and
issuing an acknowledgement notification to the confirming the execution of the actions requested ;
wherein upon receiving the acknowledgement notification, the local data management system is configured for updating the corresponding records to reflect any changes made to the corresponding data records; and
wherein the communication module is configured for facilitating the communication of messages between the central and the local data management system by converting the data format of the transmitted message to a first or second data format depending on the destination data management system.

In some embodiments, the method comprises method steps corresponding to any one of the computer system functions set out above.

### Brief Description of the drawings

The following drawings are provided as an example to explain further and describe various aspects of the invention:
Figure 1 shows an exemplified implementation of a computer system according to embodiments of the present invention.
Figure 2 shows an example of a communication module according to embodiments of the present invention.
Figure 3 shows an example of a Central Reservation System (CRS) and a Property Management System (PMS) before integration according to embodiments of the present invention.
Figure 4 shows the arrangement of Figure 3 after integration using the communication module to exchange data between the two systems according to embodiments of the present invention.
Figure 5 shows an example of a communication between the CRS and PMS data management systems according to embodiments of the present invention.
Figure 6 shows an example of a workflow for exchanging data between the CRS and PMS data management systems according to embodiments of the present invention.

### Detailed Description

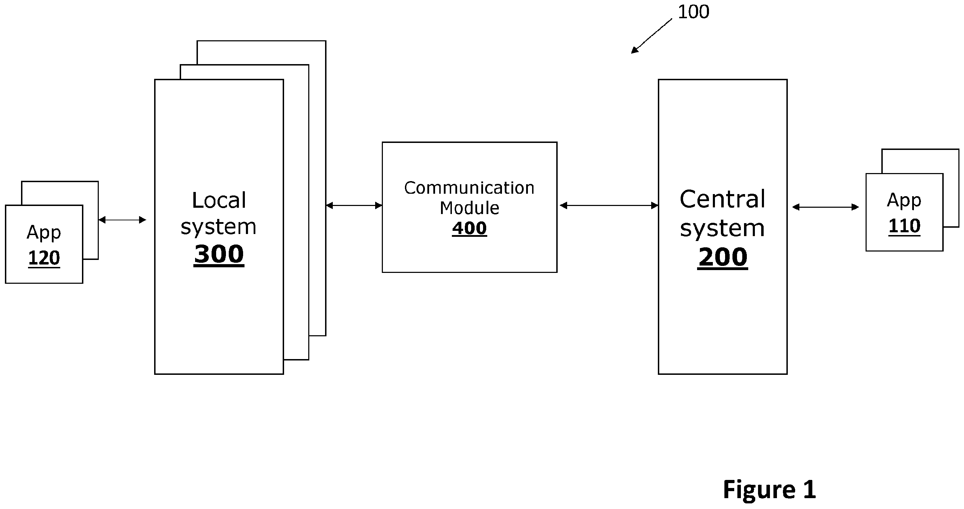

The present invention will be illustrated using the exemplified embodiments shown in figures 1 to 6, which will be described in more detail below. It should be noted that any references made to dimensions are only indicative and do not restrict the invention in any way. While this invention has been shown and described with reference to certain illustrated embodiments thereof, it will be understood by those skilled in the art that various changes in form and details may be made therein without departing from the scope of the invention. Furthermore, while the invention has been described with references to a particular system and/or a method for managing data stored in heterogeneous technology data sources, it should be understood by those skilled in the art that changes in the form and details may be made to facilitate other types of method and/or systems in related fields without departing from the scope of the invention.

Figure 1 shows an exemplified implementation of a computer system 100 according to embodiments of the present invention. The computer system 100 is provided with a central data system 200, which is connected to one or more applications 110. The central data system 200 is configured to store and manage central data records comprising data for the execution of a predetermined service. For example, in response to a user booking request received at one of the applications 110, the central data management system 200 is configured for creating one or more central data records containing the data associated with the reservation, which are stored in a database in a first data format. The central data management system 200 is communicatively coupled with one or more local data management systems 300, each connected to one or more service application 120 for the performance of a specified service. Each local data management system 300 may be configured to store local data records associated with one or more central data records. For example, a local data management system 300 may be configured as a hotel property management system, configured for storing in local data records information about room reservations associated with corresponding reservation data records stored in the central data management system 200. Other local data management systems 300 may be associated with the provision of a different service, e.g. car rental reservation, restaurant reservation, and the like. The local data record is stored in a second data format that is different from the data format of the data stored in the central data management system 200. For example, the local data management system 300 may be configured to store data in an SQL database or another database technology that is different from the database technology used by the central database management system 200. As such, the direct access and exchange of data between the central and the first data management systems 200, 300 is not possible. For this reason, a communication module 400 is provided to facilitate the exchange of data between the central data management system 200 and the one or more local data management systems 300 for the execution of the desired service. The communication module is configured to receive messages from the central and one or more local data management systems 200, 300, and before transmitting them to the desired destination data management system, to convert the message format so that it is compatible with the format of the destination data management system. For example, the communication module 400, in response to receiving a request from a local data management system 200 to access information stored in a central data record, is configured to convert the data format of the message using a compatible adaptation protocol before the message is transmitted to the central data management system 300. For example, the information may be a user profile stored in the data format that is different from the data format of the local data management system 200. As such, the data contained in the message can be directly consumed by the central data management system 300. Similarly, the communication module may be configured to convert the format of the data transmitted from the central data management system 200 to one or more local data management systems 300. The communication module 400 is configured to select the adaptation protocol based on a set of criteria, e.g. the source and destination data formats, the type of data, and the like. As such, the communication module 400 facilitates the exchange of data between a local data management system 300 and the central data management system 200. In this way, data stored in a different format can be integrated seamlessly to provide service, thereby dispensing with the need to duplicate data in a different system while maintaining a central storage location.

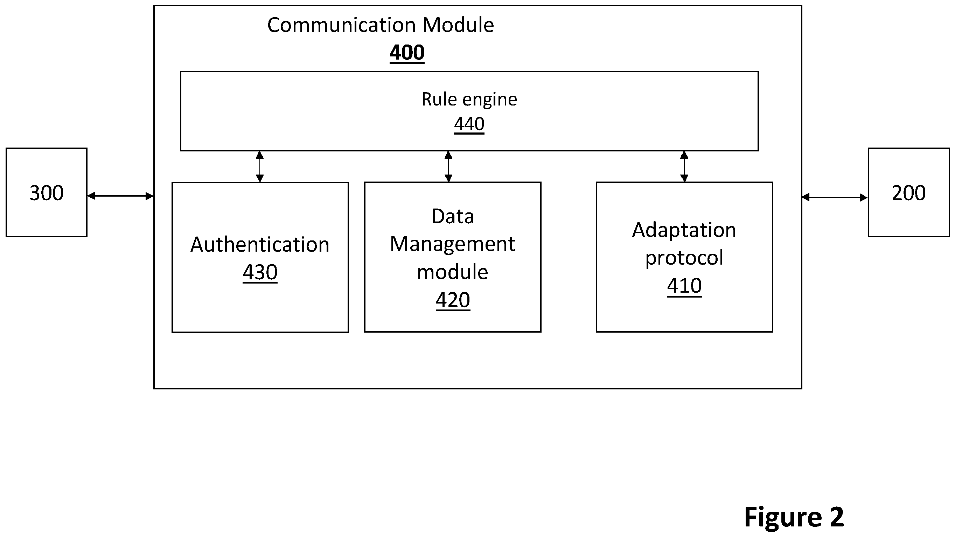

Figure 2 shows an example of a communication module 400 in accordance with the present invention. The communication module 400 may be a web service application accessed via the internet. The communication module 400 comprises an adaptation protocol module 410 configured for converting and/or translating the format of the data exchanged between the local data management system 300 and central data management system 200. The adaptation protocol module is configured for selecting based on criteria and/or rules defined by a rule engine 440, an adaptation protocol for converting and/or translating the data format. For example, the rule engine 440 may comprise rules and criteria for selecting an adaptation protocol. The rules and/or criteria for selecting an adaptation protocol may comprise one or more of the format of the destination system, the type of data being exchanged, the processing requirements of the destination data management system, the communication network bandwidth, and the like. For example, the communication module 400 may be configured to select an adaptation protocol for converting the data format, which is compatible with the destination data management system and further satisfy a set of communication bandwidth requirements. The communication module 400 further comprises an authentication module 430, which is configured for authenticating the system's credentials and/or application submitting a message request to the central data management system 200. The authentication module 430 is configured based on stored authentication credentials to authenticate the system transmitting a message request to the central data management system 300.

Further, the authentication module 430 may be configured for authenticating a message request based on a set of rule and/or criteria stored in the rules engine 440, e.g. the source of the message request, the type of data contained in the message, the length and/or size of the message, and the like. Once the authentication has been successfully succeeded, messages from the authenticated source data management system are communicated to the central data management system 200. The authentication module 430 may also be used in reverse, where requests from The communication module 400 may further comprise a data management module 420, which is configured for performing actions to the data records stored in the local data management systems 300 and/or the central data management systems 200. The data management module 420 is configured for processing the message transmitted between a source and a destination data management system to assess whether any actions need to be performed on corresponding data records of the destination data management system. The actions to be performed on a data record may be determined based on rules and/or criteria stored in the rule engine 440. To functionality of the data management module 420 may be demonstrated with the following example :
During an update to a central data record, e.g. change of hotel room type made by a user, the central data management system 200 issues a message containing the changes made to the central data record, which is transmitted to the local data management system 300 that handles the service affected by the change, e.g. specified hotel reservation involving the hotel room. The message issued by the central data management system 200 would be converted by the adaptation protocol module 410, as detailed above, and subsequently processed by the data management module 420 to determine, based on a set of rule, the criticality of the changes made to the specified central data record. If the changes made to the central data record are critical, then based on the rules and/or criteria, one or more actions may be performed directly by the data management module 420 to the corresponding local data records. For example, if the change made to the central data record involves changing of the hotel room type, e.g. from a standard room to a suite, then the data management module 420 would perform the necessary changes to the corresponding local data record by deleting the reserved standard room and booking an available suite room instead. Once the changes are performed in the data record, a notification is issued to the user and/or application with information on the actions taken on the local data records. The notification may be issued to a user in a front-desk application informing them of the change in the local data record, e.g. the standard room is now available and that the suite room is booked. If the changes made to the central data record are not critical, based on the rules and/or criteria applying, then the data management module 420 may forward the message directly to the application executing the service.

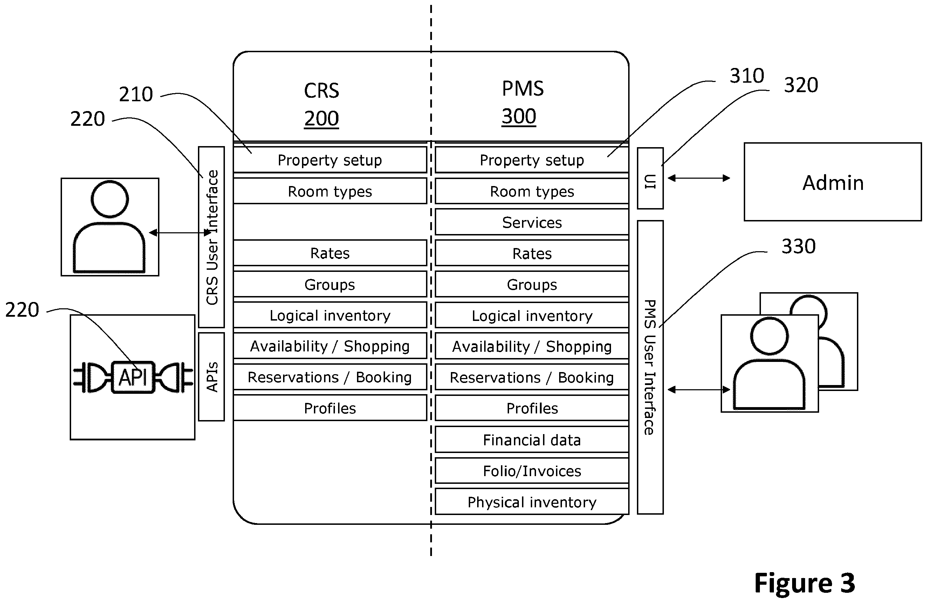

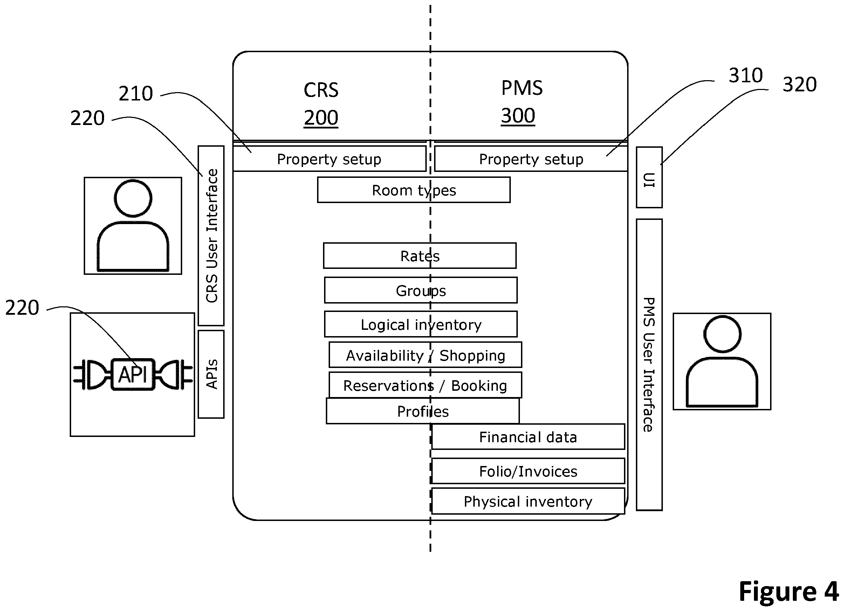

Figures 3 and 4 show exemplified embodiments of a Central Reservation System (CRS) 200 and a Property Management System (PMS) 300, representing the interaction of a central management system 200 and a local data management system 300. Figure 3 shows the CRS and PMS systems 200, 300 before integration with the use of the communication module 400. Each of the CRS and PMS systems comprises data records 210 and 310, which are replicas of one another. In this case, a CRS system user wanted to access via the CRS user interface 220, a data record that is only available on the PMS system 300, would have to separately log-in to the PMS system via the PMS user interface 330. As such, without the data integration offered by the present invention, data would need to be replicated in both systems, or where replication is not possible, the data needs to be separately accessed in order to perform the requested service. This provides a certain limitation in terms of storage requirements, access, and synchronisation issues. For example, consider the situation where a booking is performed at the PMS system 300, while at the same time, the same data is shown as available at the CRS, which may lead to double booking. Furthermore, the data for each property and user profile needs to be duplicated in both systems. In the PMS system 300, an admin portal interface 320 may be used to set up the data records associated with each property, e.g. rooms types, services, etc. Similarly, certain information stored in the CRS system 200 may be accessed by another compatible system via APIs 220. Figure 4 shows the integration of data between the CRS 200 and PMS 300 system using the communication module discussed above. As shown, since the data contained in the CRS 200, such as the rates, groups, profiles, availability, and the like, can be accessed via the PMS system 300 via the communication module, only a single version of the data is required. This leads to greater flexibility in handling data and exposing users and/or application to a single version of the truth, i.e. a single version of the data, compared to the system shown in figure 3, where replication and synchronisation issues may cause issues.

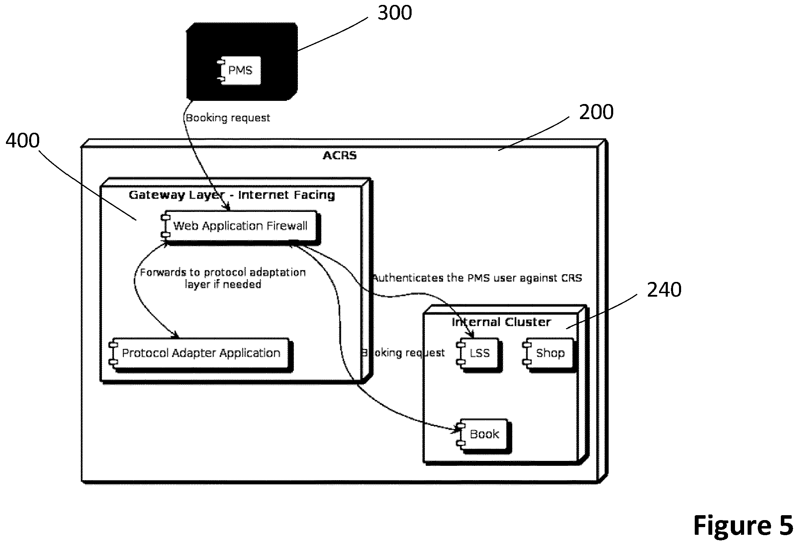

Figure 5 shows an example of a communication between the PMS system 300 and the CRS system 200 in accordance with embodiments of the present invention. As shown, a booking request is transmitted from the PMS 300 to the communication module 400 gateway layer, which comprises the authentication module 430 and the adaptation protocol module 410 as previously described. The data management module 420 may also be part of the internet-facing gateway layer. Once the request is received at the communication module 400, it is submitted to the web application firewall, where the authentication credentials of the system initiating the request are validated, based on rules and/or criteria, as previously described. Once authenticated, the request is forwarded, if needed, to a protocol adapter application, corresponding to the protocol adapter module 410. The adaption is taking place, and the format of the message request is formatted to the format of the CRS 200 before it is communicated to the internal clusters 240 of the CRS system 200, where the booking is processed. The cluster 240 is configured to issue a response to the booking request, which is transmitted via the web application firewall, and if needed, adapted by the protocol adapter application to the PMS 300.

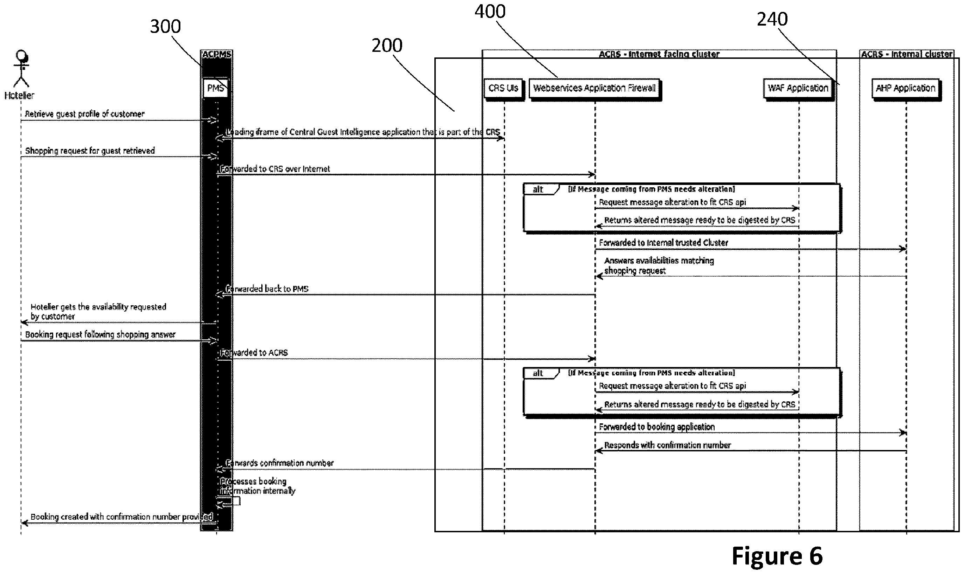

Figure 6 shows a more detailed example of the interaction between the PMS 300 and the CRS 200. In this example, a user, e.g. a hotelier, initiates to the PMS 300 a request for retrieving the profile of a user/customer, which is forwarded by the PMS 300 to the CRS 200, via the communication module 400, where here is shown as being part of the CRS 200. The request arrives at the internet-facing cluster, where the central guest intelligence cluster is loaded with the requested profile information. The user then initiates a booking request to be made for the user profile, which is forwarded to the CRS 200 via the communication module. The message containing the booking request data is received by the web application firewall, where the message request is authenticated as previously described. The format of the message is then checked, and if it is incompatible with the CRS data format, then it is adapted using the protocol adapter application as shown before it is transmitted to the internal clusters of the CRS 200 for processing. The internal CRS clusters return a response to the booking request with available data, which is forwarded to the PMS system 300. The hotelier receives the availability information and issues a booking request following the shopping answer from the CRS cluster, which is forwarded to the CRS internal clusters as above for confirmation. Once the booking request is confirmed at the CRS 200, it is forwarded via the communication module to the PMS system 300, where the booking is processed internally, and booking information are communicated to the user.

In some embodiments, the method comprises method steps corresponding to any one of the systems for managing the allocation of computing resources functions set out above.

## Claims

1. A computer system for managing data stored in heterogeneous technology data sources, the system comprising:
a central data management system comprising a database configured to store, in a first data format, central data records comprising primary data associated with one or more application services;
a local data management system comprising a database configured to store, in a local data format, local data records comprising data associated with data of a corresponding central data record;
wherein the local data records and the primary central data records are accessible by one or more service applications connected to the central and local data management system for the execution of a predetermined service; and
a communication module communicatively coupled to the central and local data management systems and configured to facilitate, in response to message requests received from the one or more service applications, the exchange of data between the central data management system and the local management system for the execution of the predetermined service by the one or more service applications;
wherein the communication module is configured, before the communication of the data to be exchanged, to convert the data format of the data to the corresponding first or second data format depending on the destination data management system, to facilitate the communication and processing of data between the central and local data management systems.

2. The computer system of claim 1, wherein the communication module comprises a message adaption module configured for selecting, based on the technology of the receiving data management system, a data adaptation protocol for converting the data format of the data to be exchanged between the central and local data management systems.

3. The computer system of claim 1 or 2, wherein the communication module comprise a data management module configured, in response to receiving a message request from the central data management system associated with a change of primary data of a central data record, to assess, based on information contained in the message, whether the update necessitates certain actions to be performed to one or more corresponding local data records, and if certain actions are to be performed, the data management module is configured to:
identify the local data records affected by the update in the central data record;
perform the necessary actions in the identified one or more local data records; and
issue a notification to a user and/or application connected to the local data management system informing of the actions taken to one or more local data records.

4. The computer system of claim 4, wherein the actions to be performed are determined based on a set of criteria.

5. The computer system of claim 3 or 4, wherein the actions to be performed, comprise at least one of updating, deleting, or modifying the local data records.

6. The computer system of any one of the preceding claims, wherein the communication module comprises an authentication module configured for authenticating, based on a set of authentication criteria, the credential of the service application issuing the message request before the message request is formatted and communicated to the desired destination data management system.

7. The system of claim 6, wherein the authentication module is configured to authenticate the credentials of a service application request based on stored authentication data.

8. The system of any one of the preceding claims, wherein the central data management system is communicatively coupled to a booking application configured for generating, in response to receiving a reservation request from a reservation service application, one or more central data records associated with the reservation request; and upon creation of the one or more central data records, the central data management system is configured for issuing a notification, via the communication module, to the local data management system.

9. The system of claim 8, wherein the local data management system is configured, upon receiving the notification, of generating and/or updating corresponding local data records.

10. The computer system of any one of the preceding claims, wherein the local data records are stored in a SQL database, and the central data records are stored in different database architecture.

11. The system of any one of the preceding claims, wherein the central data management system is a central reservation system configured for generating booking data records stored as central data records, and the local data management system is a property management system configured for associating property management records to each booking data record.

12. The computer system of any one of the preceding claims, wherein the central and local data management system are hosted on respective heterogeneous architecture data servers.

13. The system of any one of the preceding claims, wherein the central data management system and the local data management system are accessible via a common user interface.

14. The system of any one of the preceding claims, wherein the communication module is a web application server accessible via the internet.

15. A method for managing data stored in heterogeneous technology data sources, the method performed in a computer system according to 1 to 14 and comprising the steps of:
receiving at a local data management system a message request from a service application for performing certain actions to primary data of a central data record stored in a database of a central data management system;
transmitting the message request to the central data management system via a communication module;
receiving the message request at the central data management system;
performing at the central data management system the actions indicated in the message request; and
issuing an acknowledgement notification to the confirming the execution of the actions requested ;
wherein upon receiving the acknowledgement notification, the local data management system is configured for updating the corresponding records to reflect any changes made to the corresponding data records; and
wherein the communication module is configured for facilitating the communication of messages between the central and the local data management system by converting the data format of the transmitted message to a first or second data format depending on the destination data management system.
